# EUROPÄISCHE PATENTSCHRIFT

(11) **EP 0 688 500 B1**
(45) Veröffentlichungstag und Bekanntmachung des Hinweises auf die Patenterteilung: **28.11.2001**
(21) Anmeldenummer: 95109254.3
(22) Anmeldetag: 14.06.1995
(51) Int. Cl.: A01N 63/00

(54) **Verfahren zum Konservieren von wässrigen Lösungen oder Dispersionen in der Papier- und Zellstoffindustrie**
Method for conservation of aqueous solutions or dispersions in papermaking and cellulose industries
Procédé pour la conservation des solutions ou dispersions aqueuses dans l'industrie du papier et de la cellulose

(30) Priorität: 20.06.1994 DE 4421504
(43) Veröffentlichungstag der Anmeldung: 27.12.1995
(73) Patentinhaber: Lumos Trading & Investments Corporation, Road Town, Tortola (VG)
(72) Erfinder: Möller-Bremer, Christine, Dr. Ing., D-27637 Nordholz (DE)
(74) Vertreter: Kador & Partner

(56) Entgegenhaltungen:
- EP-A- 0 236 989
- EP-A- 0 372 520
- EP-A- 0 558 360
- WO-A-93/09671
- DE-A- 3 825 312
- DE-A- 4 127 744
- FR-A- 2 102 037
- FR-A- 2 654 437
- US-A- 4 872 986
- CHEMICAL ABSTRACTS, vol. 99, no. 21, 21.November 1983 Columbus, Ohio, US; abstract no. 172598, L.A.ROBERTSON ET AL. 'Thiosphaera pantotropha gen.nov.sp.nov., a facultatively anaerobic, facultatively autotrophic sulfur bacterium' & J.GEN.MICROBIOL., Bd. 129, Nr. 9, 1983 Seiten 2847-2855,

## Beschreibung

Die Erfindung bezieht sich auf ein Verfahren zum Konservieren unter weitestgehendem Luft bzw. Sauerstoffausschluß von wäßrigen Lösungen oder Dispersionen in der Papier- und Zells offindustrie, welche organische Stoffe enthalten, die durch als Verunreinigung vorliegende anaerobe Bakterien degradiert werden.

Es gibt eine Reihe von Materialien, welche in wäßriger Lösung oder Dispersion gehalten werden müssen, um ihre Herstellung und Handhabung, ihren Transport und die Lagerung sowie die Anwendung beim Endverbraucher zu erleichtern. Solche Materialien bzw. Produkte werden insbesondere in Industriezweigen wie der Papier- und Zellstoffindustrie benötigt. Dazu gehören beispielsweise Pigmente, Füllstoffe, Papiermaschinen-Ausschuß, Stärke, Leim oder Retentionsmittel, welche alle in Form von wäßrigen Lösungen oder Dispersionen zubereitet werden können.

In dem vorhandenen wäßrigen Milieu finden Mikroorganisme i, die stets als Kontaminierung vorhanden sind, optimale Lebensbedingungen vor. Bedingt durch das hohe organische und anorganische Nährstoffangebot und ein bezüglich Temperatur und pH-Wert günstiges Umgebungsmilieu findet ein vermehrtes und rasches Wachstum solcher Mikroorganismen statt.

In derartigen Lösungen bzw. Dispersionen sind stets auch andere organische Stoffe enthalten, die bei der Zubereitung der wäßrigen Lösungen oder Dispersionen mit dem Rohmaterialien eingeschleppt werden Stärke und Leim sowie die Zusammensetzung von Papiermaschinen-Ausschuß bilden selbst Nahrung für bestimmte Arten von Mikroorganismen.

Mit dem vermehrten Wachstum solcher Mikroorganismen werden gleichzeitig unter anderem die als Kontamination vorhandene organische Stoffe verstärkt abgebaut, was mit einer Änderung der produktspezifischen Eigenschaften des Flüssigproduktes einhergeht.

Es gibt im wesentlichen zwei unterschiedliche Bedingungen, unter denen die genannten wäßrigen Flüssigprodukte gewöhnlich gehandhabt werden, und welche einen starken Einfluß auf die Art des mikrobiellen Wachstums und damit der mikrobiellen Aktivität haben.

Unter der ersten Bedingung werden die Flüssigprodukte kontinuierlich oder in regelmäßigen Abständen unter Luftzutritt gemischt. Durch den damit verbundenen Luft- bzw. Sauerstoffeintrag wird das Wachstum insbesondere von aeroben Mikroorganismen gefördert. Derartige Bedingungen finden sich vor allem in Systemen, in denen Stärke oder Leim hergestellt werden oder in Papierausschuß-Pulpern sowie in den Lagertanks oder Transportbehältern für derartige Produkte. Eine Folge der zunehmenden mikrobiellen Kontamination ist hier die Schleimbildung und -ablagerung und eine Veränderung der erwünschten spezifischen Produkteigenschaften wie Viskosität, pH-Wert, Farbe und Weißgrad.

Unter der zweiten Bedingung werden die wäßrigen Flüssigprodukte nicht gerührt, sondern in Behältern bzw. Tanks unter weitestgehendem Luft- bzw. Sauerstoffausschluß gelagert. Nach einer kurzen Anfangsphase, in welcher der beim Abfüllen eingetragene Sauerstoff durch die vorhandenen Mikroorganismen aufgezehrt wird, kommt es hier zum Wachstum anaerober Mikroorganismen. Diese anaerob atmenden Mikroorganismen geben bedingt durch ihren Metabolismus, Wasserstoffionen ab, welche Nitrat, Sulfat, Schwefel und Carbonate zu Nitrit, Schwefelwasserstoff, Methan, Essigsäure oder anderen hochreduzierten Verbindungen reduzieren (Basic Biotechnology-A Students Guide, P. Präve, U. Faust, W. Sittig, D.A. Sukatsch, VCH Verlagsgesellschaft Weinheim, 1987, Seite 101).

Anaerob atmende Mikroorganismen können daher insbesondere im Hinblick auf Transport und Lagerung von Flüssigprodukten schwerwiegende Probleme zur Folge haben.

Wie bereits vorher erwähnt, scheiden diese Wasserstoffionen aus, welche ihrerseits auf bestimmte Stoffe reduzierend wirken, die entweder Produktbetandteil des Flüssigproduktes sind oder darin als Kontamination enthalten sind. Beispielsweise entsteht bei der Reduktion von Sulfat oder Schwefel Sulfid in Form von Schwefelwasserstoff. Schwefelwasserstoff ist nicht nur hochgiftig, er ist auch wegen seines Geruches nach faulen Eiern und der Eigenschaft Produkte zu verfärben mehr als unerwünscht. Auch andere Reduktionsprodukte wie Nitrit, Methan oder Essigsäure führen zu einer unerwünschten Veränderung der spezifischen Produkteigenschaften, beispielsweise dem Weißgrad und Geruch von Ausschußpapier oder Rohfasersuspension, sowie von Farbe und Geruch von fertigem Papier.

Um die Zunahme der mikrobiellen Kontaminierunc und der damit verbundenen Degradierung bzw. dem Abbau von in den Flüssigprodukten vorhandenen organischen Stoffen zu verhindern oder wenigstens einzudämmen, standen bisher wenige Möglichkeiten zur Verfügung.

Eine Möglichkeit ist, die Lösung oder Dispersion sehr schnell zu verbrauchen, bevor der mikrobielle Abbau beginnt. Dieser Ansatz ist nur beschränkt anwendbar, da die mikrobielle Degradierung unter den gewöhnlich optimalen Bedingungen schon nach wenigen Stunden einsetzt. Diese Möglichkeit ist beispielsweise im Zusammenhang mit Papierausschuß praktikabel, der schnell verarbeitet wird, aber beispielsweise für die Erhaltung der Stabilität von Pigmentslurries völlig untauglich ist.

Eine weitere Möglichkeit besteht darin, die wäßrigen Flüssigprodukte unter Bedingungen zu lagern, die ein Wachstum der Mikroorganismen nicht zulassen. Solche Bedingungen sind beispielsweise sehr hohe oder sehr niedrige Temperaturen. Beides ist unter Praxisbedingungen sehr schwer zu erreichen, und kommt wohl am ehesten für die Bedingungen in einem Stärkekocher oder für die Lagerung der Stärke in Frage.

Eine weitere Möglichkeit besteht darin, das Wachstum von Mikroorganismen durch den Zusatz von Bioziden zu unterdrücken oder gänzlich auszuschalten. Es ist jedoch nur eine beschränkte Zahl von Bioziden gegen anaerob atmende, insbesondere sulfatreduzierende Mikroorganismen wirksam und gerade in diesen wird die schlimmste Form der Kontaminierung gesehen. Darüberhinaus ist die Verwendung von Bioziden zunehmend in Verruf geraten. Obwohl viele der in der Papierindustrie verwendeten Biozide sehr schnell abgebaut werden, sind sie dennoch gefährlich für Mensch und Umwelt, wenn sie außerhalb des normalen Verwendungsbereiches gelangen, beispielsweise bei einem Transportunfall. Außerdem neigen Mikroorganismen sehr zur Resistenzbildung gegenüber Bioziden, was nur durch häufigen Biozidwechsel oder Erhöhung der Dosis zu umgehen ist. Einige Biozide enthalten auch Halogene und tragen so zum potentiellen Einfluß von absorbierbaren organischen Halogenen (AOX) auf die Umwelt bei. Viele Papier- und Zellstoffabriken haben außerdem biologische Kläranlagen, die durch unsachgemäße Handhabung von Bioziden schwer in Mitleidenschaft gezogen werden können.

Eine weitere Möglichkeit, das Wachstum von Mikroorganismen in den Flüssigprodukten zu kontrollieren, besteht im Zusatz starker Oxidations- und Bleichmittel. Oxidationsmittel wie Wasserstoffperoxid wirken sehr zuverlässig, die Handhabung ist aber nicht zuletzt wegen der Ätzgefahr sehr problematisch. Derartige Produkte sind darüberhinaus teuer und die Behandlung muß kontinuierlich erfolgen, da sich das Wasserstoffperoxid schnell veroraucht. Das gleiche gilt für Bleichmittel wie Hypochlorid und Bromchlorhydantoin. Letztere tragen darüberhinaus zur Erhöhung der AOX-Werte im fertigen Produkt bei.

Aus EP-A-0372520 ist es bekannt, im Kreislaufwasser die Schleim- und Belagsbildung, die durch sessile Bakterien hervorgerufen wird, durch Zugabe nicht-sesiler Bakterien zu verhindern. Nach EP-A-0558360 wird dazu dem Kreislaufwasser in Anlagen der Papierindustrie als nicht-sessiles Bakterium Staphylococcus Carnossus zugesetzt. Nach WO-A-9309671 wird das Wachstum schädlicher Pilze im Kreislaufwasser von Papiermaschinen durch Zugabe von Pseudomonas und Enterobacteria bekämpft. Nach DE-A-4127744 werden beim sogenannten Melasse-Verfahren zur Erhöhung der Erdölabgabe aus Erdöllagerstätten zur Unterdrückung sulfatreduzierender Bakterien Clostridienstämme eingesetzt.

Aufgabe der vorliegenden Erfindung ist es daher, eine umweltfreundliche Methode für die Konservierung von wäßrigen Lösungen und/oder Dispersionen in der Papier- und Zellstoffindustrie zur Verfügung zu stellen, die zuverlässig den durch anaerobe Bakterien bewirkten mikrobiellen Abbau organischer Stoffe, die in diesen Lösungen bzw. Dispersionen enthalten sind, unterbindet.

Dies wird erfindungsgemäß mit dem im Anspruch 1 gekennzeichneter Verfahren erreicht. In den Ansprüchen 2 bis 15 sind bevorzugte Ausführungsformen des erfindungsgemäßen Verfahrens angegeben. Die Ansprüche 16 bis 19 betreffen die Verwendung von lebenden Mikroorganismen zur Hemmung des Wachstums degradationsfördernder anaerober Bakterien, die in bestimmten Behältern und Anlagen der Papierindustrie vorliegen.

Überraschenderweise tritt bei der Anwendung des erfindungsgemäßen Verfahrens, nämlich der Zugabe von ausgewählten spezifischen Mikroorganismen zu wäßrigen Lösungen oder Dispersionen (Emulsionen, Suspensionen) ein starker und lang andauernder Konservierungseffekt ein, der auf der Unterdrückung unerwünschten Wachstums organische Substanzen degradierender anaerober Bakterien beruht. Dies ist um so überraschender, da die Zugabe von Mikroorganismen am Anfang eine Erhöhung der organischen Belastung und der Keimzahl bewirkt.

Das erfindungsgemäße Verfahren zeigt einen umweltfreundlichen Weg für die Behandlung einer Reihe von Flüssigprodukten gegenüber unerwünschtem mikrobiellen Abbau und dem damit verbundenen Verlust der produktspezifischen Eigenschaften wie Weißgrad, Farbe, Geruch und Korrosivität.

In vorteilhafter Weise können die Mikroorganismen, die einem unter Luft- bzw. Sauerstoffausschluß befindlichen Flüssigprodukt zugesetzt werden, so ausgewählt sein, daß sie speziell das Wachstum von anaeroben atmenden Bakterien hemmen. Dies ist besonders von Vorteil wenn diese anaeroben Bakterien sulfatreduzierende Eigenschaften aufweisen, da damit die Bildung von Schwefelwasserstoff ausgeschlossen wird. Wie erwähnt ist Schwefelwasserstoff nicht nur giftig, es riecht auch übel und bewirkt beim Endprodukt einen muffigen Geruch und hat unerwünschten Einfluß auf dessen Farbe.

Die zur Hemmung des Wachstums der degradierenden Bakterien eingesetzten Mikroorganismen sind vorteilhaft aus der Gruppe bestehend aus Bakterien und Pilzen ausgewählt. Es können auch Mischungen daraus eingesetzt werden.

Als Mikroorganismen haben sich für das erfindungsgemäße Verfahren insbesondere Bakterien als geeignet erwiesen, und zwar vor allem die Bakterien der taxonomischen Gruppen:

Alcaligenes, Enterobacteria, Pseudomonas, Bacillus, Lactobacillus, Micrococcus, Staphylococcus, Streptomyces, Cellulomonas, Thiobacillus und Streptococcus, Insbesondere haben sich Alcaligenes eutrophus; Nitrosomonas, Nitrobacter, Nitrococcus, Nitrospira, Bacillus megaterium, B. mascerans, B. polymyra, B. subtilis, B. stearothermophilus, B. coagulans, B. circulans, B. pasteurii; Chromatium; Pseudomonas arvilla, P. putida, P. stutzeri, P. fluorescens, P. denitrificans, Zoogloea; Zyomonas; Leuconostoc; Proteus vulgaris; Sporosarcina ureae; Rhodopseudomonas; Nocardia; Agrobacterium; Cytophaga; Sporocytophaga; Streptomyces; Thiosphaera; Variovorax; Paracoccus; Micromonospora; Clostridium pectinovorum, C. felsiniun; Azetobacter; Cellulomonas; Azomonas; Rhizobium; Thiobacillus, Thiotrix, Sphaerotilus, Micrococcus; Arthrobacter, Brevibacterium; Photobacterium; Xanthomonas, Acetobacter und Lactobacillus als vorteilhaft erwiesen.

Als besonders geeignet hat sich Thiosphera Pantotropha erwiesen.

Obwohl die vorstehend genannten Bakterien in dem erfindungsgemäßen Verfahren eine ausgezeichnete Wirkung zeigen, können auch andere Mikroorganismen eingesetzt werden. Dieses sind Pilze, aus der Gruppe Myxcmycetes, Phycomycetes, Ascomycetes, Basidiomycetes und Deuteromycetes, insbesondere Acrasiales, Aspergillus niger, A. oryzae, A. wentii; Candida lipoytia, trcpicalis; Saccharomyces; Chaetomium; Cryptococcus.

In einer bevorzugten Ausführungsform des erfindungsgemäßen Verfahrens werden die Bakterien in Form von Trockenbakterien oder Mischkulturen von Trcckenbakterien eingesetzt. Diese Mischkulturen von Trcckenbakterien umfassen Bakterien, wie Aeromonas, Pseudomonas, Bacillus, Lactobacillus, Micrococcus, Streptomyces, Actinomyces, Rhodococcus, Nitrosomonas, Nitrobacter und Thiospaera.

Die Mikroorganismen können generell entweder als Trokkenpulver oder als flüssiger Slurry zugegeber werden. Das Trockenpulver kann entweder nur aus getrockneten Mikroorganismen bestehen oder diese werden mit einem Trägermaterial oder Nährstoffen vermischt (Allgemeine Mikrobiologie, Hans G. Schlegel, Seite 174, Thieme Verlag 1985).

Dabei sollte das Trägermaterial so gewählt werden, daß es keinen negativen Einfluß auf die Produkteigenschaften des zu konservierenden Produktes hat. Es kann aus verschiedenen Zuckern, wasserlöslicher Stärke oder ähnlichen Substanzen bestehen. Die Trockenprodukte werden in optimaler Weise zunächst aktiviert, indem man sie in wäßrigem Medium dispergiert, und dann für einen gewissen Zeitraum darin inkubiert, z.B 1 bis 10 Stunden. Diese Suspension mit aktivierten Mikroorganismen wird dann dem zu konservierenden Flüssigprodukt zugesetzt. Alternativ dazu können die Trockenbakterien auch direkt dem zu behandelnden Produkt zugegeben werden.

Die Mikroorganismen können auch in Form eines stabilisierten flüssigen Produktes eingesetzt werder. Solch ein flüssiges Produkt ist bevorzugt eine Suspension von sporenbildender Bakterien wie den Bacillus-Typen, oder eine wäßrige Suspension von lebenden Bakterien im Ruhezustand, die Substanzen enthält, welche die Aktivierung und das Wachstum der Bakterien inhibiert oder ein geringes Nährstoffangebot aufweist. Solch ein flüssiges Produkt wird entweder in einem wäßrigen Medium oder im zu behandelnden Flüssigprodukt verdünnt und dadurch aktiviert.

Die Sporen von sporenbildenen Organismen gehören bevorzugt den folgenden aeroben Spezien an:
Bacilli magaterium, B. cercus, B. subtilis, B. lichiniformus, B. anthracis, B. thuringiensis, B. polymyxa, B. mascerans, B. stearothermophilus, B. circulans, B. pasteurii. Sie können bevorzugt auch den folgenden anaeroben Spezien angehören:
Sacharolytische Clostridien, umfassend C. butyricum, C. acetobutyricum, C. cellulosi; Harnstoff zersetzende Clostridien wie C. acidiurici und andere sporenbildende Typen wie Oscillospira guilliermondi.

Die Menge an zugesetzten Bakterien richtet sich nach dem Gehalt an biologisch abbaubaren Substanzer im zu konservierenden Produkt und beträgt vorteilhaft 1 bis 10¹⁰ Mikroorganismen pro kg an biologisch abbaubarer Substanz, insbesondere jedoch 10 bis 10⁹ und ganz besonders 10² bis 10⁸ Mikroorganismen pro kg an biologisch abbaubarer Substanz. Die Bakterienpräparate in Flüssig- oder Trockenform enthalten im allgemeinen 10⁶ bis 10¹⁰ Bakterie pro gramm an Produkt.

Die Erfindung beruht auf der Ausnützung der Interaktion zwischen Mikroorganismen. Das heißt, durch den Zusatz von speziellen Mikroorganismen werden die Lebensbedingungen für die als Kontamination vorliegenden anaeroben Bakterien verschlechtert. Dies kann durch z. B. direkte Nährstoffkonkurrenz, Veränderung des Milieus durch Ansäuerung, Hemmstoffproduktion usw. erreicht werden. Daraus folgt auch, daß bei jeder Konservierurg entschieden werden muß, welche Stoffe als Verunreinigung vorliegen bzw. welche Stoffe durch die Mikroorganismen nicht angegriffen werden dürfen.

Mikroorganismen können im allgemeinen eine Reihe von Stoffen als Substrat verwenden, aber kein Mikroorganismus kann alle organischen Substrate verwerten. Daraus folgt, daß z. B. Pseudomonas dort eingesetzt werden kann, wo organische Substanzen verwendet werden, die durch eine bestimmte Pseudomonas Art nicht verwertet werden können.

Ferner sind bestimmte Pseudomonas Arten in der Lage, Hemmstoffe für andere Mikroorganismen zu produzieren und dadurch diese zu hemmen z. B. P. acidophila und P. mesoacidophila produzieren β-Lactam-Antibiotika, P. pyrrocinia liefert ein Antibiotikum namens Pyrrolnitrin, P. syringae produziert Syringotoxin und Syringomycin. Bei Einsatz all dieser Pseudomonas Arten kommt es zu einer Hemmung der als Kontamination vorliegenden Mikroorganismen und zu einer Konservierung des organischen Produkts.

Beim erfindungsgemäßen Verfahren ist es weiter vorteilhaft, zusätzlich Enzyme zuzusetzen, die den Abbau unerwünschter organischer Produkte katalysieren. Solche Enzyme können Amylasen, Proteasen, Pektinasen, Cellulasen, Acylasen, Aldolasen, Alkanoxygenase, Alkoholdehydrogenasen, Dehydrogenasen, Phosphatasen, Dehydrasen, Dehydratasen, Oxygenasen, Oxidase, Lipasen, Permeasen, Kinasen, Carboxylasen, Phosphorylasen, Decarboxylasen, Reduktasen, Oxidoreduktasen, und Hemizellulasen sein. Welches Enzym jeweils eingesetzt wird, hängt von den zu eliminierenden Substanzen ab.

Bevorzugt beträgt die Menge der zugesetzten Enzyme 10 bis 10.000 IU pro kg TOC.

Unter bestimmten Bedingungen ist es weiter vcn Vorteil, wenn dem zu konservierenden Flüssigprodukt weitere Additive wie beispielsweise Tenside zugesetzt werden. Im Speziellen kommen hier nicht-ionische Tenside und/oder Lignosulfate, die aus dem Europäischen Patent 0 185 963 bekannt sind, zum Einsatz. Diese Produkte können gleichzeitig mit den zugegebenen Bakterien oder einzeln dem zu konservierenden Flüssigprodukt zugesetzt werden.

Der Zusatz der Mikroorganismen und/oder anderer Additive erfolgt vorzugsweise zeit- oder mengenproportional.

Bei der Behandlung von wässrigen Flüssigprodukten kann man zwei grundlegende Mechanismen unterscheiden.
1. Das Prinzip der Behandlung beruht darauf, daß bestimmte selektierte Bakterien spezifische Nährstoffansprüche haben. Die zugesetzten Mikroorganismen nützen die vorhandenen Nährstoffe im Wettbewerb mit den als Verunreinigung präsenten anaeroben Bakterien besser und verringern so die Wachstumsmöglichkeiten der bereits vorhandenen anaeroben Bakterien. Außerdem können auch unerwünschte Nebenprodukte der kontaminierenden Bakterien, z.B. Schwefelwasserstoff zu ungefährlichen Endprodukten metabolisiert werden. Auch eine Kombination beider Wege ist möglich.
2. Der zweite Wirkungsmechanismus des erfindungsgemäßen Verfahrens ist die Ausscheidung von Toxinen durch die zugesetzten Mikroorganismen. Die unerwünschten anaeroben Bakterien werden dadurch am Wachstum gehindert oder abgetötet. Die zugesetzten Mikroorganismen selber produzieren keinen Schleim oder andere unerwünschte Nebenprodukte und führen so zu einer deutlichen Verbesserung der Stabilität der Produkteigenschaften gegenüber unbehandelten Produkten.

Die zugesetzten Mikroorganismen werden nach ganz bestimmten Kriterien ausgewählt.

Sie müssen eine geringe Tendenz haben, sich an Oberflächen anzuheften und eine Schleimhülle auszubilden, d.h. sie müssen bevorzugt nicht-sessil leben. Sie sollten daher auch nicht zur Bildung von Kolonien oder ähnlichen Aggregaten neigen. Für die Einhaltung der letztgenannten Bedingung ist es besonders vorteilhaft, dem zu konservierenden Flüssigprodukt neben der Mikroorganismen auch Tenside und/oder Lignosulfonate zuzusetzen.

Der Sauerstoffgehalt im zu behandelnden Produkt in der Anfangsphase und über einen längeren Zeitraum hinweg hängt vom Produkt und den Lagerbedingungen ab. Diese und alle anderen Informationen, die über die Anfälligkeit des zu konservierenden Flüssigproduktes gegenüber mikrobieller Kontaminierung Auskunft geben, sind bei der Planung der Behandlung miteinzubeziehen. Außerdem muß die Anwesenheit von anderen Verbindungen, die als Wasserstoffakzeptoren für eine mikrobielle Atmung fungieren können, wie z.B. Nitrat, bekannt sein.

Diese Substanzen können analytisch bestimmt werden und sofern notwendig, zugesetzt werden, um den Metabolismus der zugegebenen oder bereits vorhandenen Bakterien zu steuern, sodaß eine optimale Konservierung erreicht wird.

Ebenfalls wichtig ist es, wie lange das entsprechende Flüssigprodukt konserviert werden soll. Bestimmte Bakterienpräparate wirken sehr effizient, aber nur über einen relativ kurzen Zeitraum. Dies ist nicht notwendigerweise ein Nachteil, da auch die meisten Biozide einem biologischen Abbau unterliegen und damit nur einen beschränkten Wirkungszeitraum haben.

Beim erfindungsgemäßen Verfahren werden die Mikroorganismen bevorzugt als sogenannte Schockdosis kurz nach der Herstellung des zu konservierenden Produktes zugegeben. Nachfolgend können geringere Mengen einmalig oder in periodischen Abständen zugegeben werden, um die Behandlung zu optimieren.

Diese Zeitabstände richten sich entweder nach Erfahrungswerten oder stützen sich auf Messungen von Produkteigenschaften wie Schwefelwasserstoffgehalt, Weißgrad, pH-Wert und Redoxpotential. Für die Zugabe der Mikroorganismen empfiehlt es sich, moderne Dosiersysteme zu verwenden, die den Ist-Zustand im System mit Elektroden erfassen und basierend auf diesen Irformationen kosteneffektiv und effizient das Produkt dosieren. Enzyme sollten örtlich und zeitlich getrennt von den Bakterien zugegeben werden, da bestimmte Enzyme wie Proteasen, die zugesetzten Bakterien schädigen, und so der Behandlungserfolg nicht gewährleistet ist.

Das erfindungsgemäße Verfahren eignet sich vorteilhaft zur Anwendung in Anlagen, in denen Papiermaschinen-Ausschuß aufgenommen, verarbeitet, transportiert oder gelagert wird. Dabei kann der Papiermaschinen-Ausschuß entweder als Naß-Ausschuß direkt vom Naß-Ende der Papiermaschine oder als Trocken-Ausschuß, wo gebrauchsfertiges Papier zu einer flüssigen Suspension wieder aufgeschlämmt wird, bestehen.

Das erfindungsgemäße Verfahren eignet sich auch zur Anwendung in Anlagen in denen Pigmentfüllstoffe in wäßriger Suspension erzeugt, verarbeitet, aufgenommen, transportiert oder gelagert werden. Derartige Suspensionen sind insbesondere Kaolinschlamm, Calciumcarbonatschlamm (gemahlen oder ausgefällt) Calciumsulfatschlamm (Gips, gerieben oder ausgeschieden oder rekristallisiert) und insbesondere Pigmentschlamm aus Papiermühlen.

Eine weitere Anwendung findet das erfinduncsgemäße Verfahren in Anlagen, in denen Stärke erzeugt, hergestellt, aufgenommen, transportiert, gelagert oder verwendet werden. Insbesondere erwähnenswert sind solche Anlagen für Stärkeschlämme und Kochstärkeschlämme inklusive Leimdispersion.

Es sei in diesem Zusammenhang ausdrücklich darauf hingewiesen, daß unter dem Begriff Anlagen insbesondere auch Transportbehälter und Lagertanks verstanden werden.

Die Erfindung wird nachfolgend anhand eines Vergleichstest veranschaulicht.

Es wurden zwei Proben einer wäßrigen Lösung von Papiermaschinen-Ausschuß hergestellt. Dieser Ausschuß besteht aus folgenden Komponenten:
a) Stoffsuspension
   Geringer Anteil an Holzschliffasern
   Gemahlenes Calziumcarbonat
   Gekochte Stärke
   Produktionshilfsmittel
b) Aufgelöstes Altpapier
   wie Stoffsuspension a) plus
   Pigment (Kalk, Kaolin)
   Latex (Styren-butadien, Acryl Copolymere)
   Optischer Aufheller
   Carboxyl-methyl-Cellulose

Eine der Ausschuß-Proben (Probe A) wurde unbehandelt in einem verschlossenen Kanister aufbewahrt. Die zweite Probe (Probe B) wurde mit 50 ppm eines Trockenproduktes von Thiosphera Pantotropha-Bakterien versetzt und ebenfalls in einem verschlossenen Kanister aufbewahrt.

Die Lagertemperatur betrug durchschnittlich 18°C. Der pH-Wert der Vergleichslösungen lag bei 7.

Nach 14 Tagen wurde den Proben A und B jeweils eine Teilmenge entnommen und auf den Weißgrad und Geruch untersucht. Der Weißgrad wurde an einem Blatt Papier, das in einer Blattbildungsvorrichtung produziert wurde, gemessen.

Ergebnis:

| | Weißgrad | Geruch (Papier) | Geruch(Ausschuß) |
|---|---|---|---|
| Probe A | grau | muffig | faule Eier |
| Probe B | weiß | 0 | 0 |

Das Ergebnis zeigt deutlich, daß durch die Zugabe von Thiosphera Pantotropha ein ausgezeichneter Konservierungseffekt, insbesondere der produktspezifischen Eigenschaften, bewirkt wird.

## Patentansprüche

1. Verfahren zum Konservieren unter weitestgehendem Luft- bzw. Sauerstoffausschluß von wässrigen Lösungen oder Dispersionen in der Papier- und Zellstoffindustrie, welche organische Stoffe enthalten, die durch als Verunreinigung vorliegende anaerobe Bakterien degradiert werden, **dadurch gekennzeichnet, daß** man den Lösungen oder Dispersionen lebende Mikroorganismen zusetzt, welche das Wachstum der anaeroben Bakterien hemmen.

2. Verfahren nach Anspruch 1, **dadurch gekennzeichnet, daß** die anaeroben Bakterien sulfatreduzierende Bakterien sind.

3. Verfahren nach Anspruch 1, **dadurch gekennzeichnet, daß** man die das Wachstum der degradierenden Mikroorganismen hemmenden Mikroorganismen aus der Gruppe der Bakterien und/oder Pilze auswählt.

4. Verfahren nach Anspruch 1, **dadurch gekennzeichnet, daß** man Bakterien der taxonomischen Gruppe
Alcaligenes
Enterobacteria
Pseudomonas
Bacillus
Lactobacillus
Micrococcus
Staphylococcus
Streptomyces
Cellulomonas
Thiobacillus
Streptococcus
oder Mischungen davon zusetzt.

5. Verfahren nach Anspruch 4, **dadurch gekennzeichnet, daß** als Bakterien Trockenbakterien oder Mischkulturen von Trockenbakterien zugesetzt werden.

6. Verfahren nach Anspruch 5, **dadurch gekennzeichnet, daß** die Mischkulturen von Trockenbakterien, welche man zusetzt, gram-negative Bakterien wie Aeromonas, Acinetobacter, Alcaligenes, Enterobacterien, Pseudomonas und/oder gram-positive Bakterien wie Bacillus, Lactobacillus, Micrococcus, Staphylococcus und Streptococcus umfassen.

7. Verfahren nach einem der Ansprüche 1 bis 6, **dadurch gekennzeichnet, daß** man Einfach- oder Mischkulturen der Mikroorganismen in einer Flüssigkeit suspendiert zusetzt.

8. Verfahren nach Anspruch 5, **dadurch gekennzeichnet, daß** die Flüssigkeit zusätzlich Additive enthält, welche den Metabolismus der Mikroorganismen unterdrücken.

9. Verfahren nach Anspruch 7 oder 8, **dadurch gekennzeichnet, daß** die in der Flüssigkeit suspendierten Mikroorganismen Sporen von sporenbildenden Organismen der aeroben Spezien Bacilli megaterium, B. cereus, B. subtilis, B. lichiniformus, B. anthracis, B. thuringiensis, B. polymyxa, B. mascerans, B. stearothermophilus, B. circulans, B. pasteurii und der anaeroben Spezien Saccarolytic Clostridium, umfassend Clostridium butyricum, C. acetobutyricum, C. cellulosae dissolvens; Pepto Clostridium wie C. hystolyticum, C. sporogenes; Harnstoff zersetzendes Clostridium wie C. acidi-uriei und andere sporenbildende Typen wie Oscillospira guilliermondii sind.

10. Verfahren nach Anspruch 3, **dadurch gekennzeichnet, daß** der dem konservierendem Produkt zugesetzte Mikroorganismus Thiosphera Pantotropha ist.

11. Verfahren nach einem der Ansprüche 1 bis 10, **dadurch gekennzeichnet, daß** die Menge der Mikroorganismen, die bezogen auf die Menge der organischen Fracht des zu konservierenden Flüssigproduktes zugesetzt wird, 1 bis 10¹⁰ Mikroorganismen oder Bakterien pro kg des gesamten organischen Kohlenstoffs (TOC) der organischen Stoffe beträgt.

12. Verfahren nach Anspruch 11, **dadurch gekennzeichnet, daß** die Menge der zugesetzten Mikroorganismen, in Abhängigkeit von den chemischen Bedingungen, dem zu konservierenden Flüssigprodukt zugesetzt wird.

13. Verfahren nach einem der Ansprüche 1 bis 12, **dadurch gekennzeichnet, daß** man der zu konservierenden Flüssigkeit weitere Additive in Form von Enzymen, Supplinen, Tensiden und/oder Lignosulfonaten zusetzt.

14. Verfahren nach Anspruch 13, **dadurch gekennzeichnet, daß** die Menge der zugesetzten Enzyme 10 bis 10000 IU pro kg TOC beträgt.

15. Verfahren nach einem der Ansprüche 1 bis 14, **dadurch gekennzeichnet, daß** die Zugabe der Mikroorganismen und/oder anderer Additive zeit- oder mengenproportional erfolgt.

16. Verwendung von lebenden Mikroorganismen zur Hemmung des Wachstums der in Lagertanks oder Transportbehältern in der Papier- und Zellstoffindustrie vorliegenden degradationsfördernden anaeroben Bakterien.

17. Verwendung von lebenden Mikroorganismen zur Hemmung des Wachstums der in einer Anlage der Papierindustrie, in welcher Papiermaschinen-Ausschuß verarbeitet, transportiert oder gelagert wird, vorliegenden degradationsfördernden anaeroben Bakterien.

18. Verwendung von lebenden Mikroorganismen zur Hemmung des Wachstums der in einer Anlage der Papier- und Zellstoffindustrie, in welcher Pigmentfüllstoffe in wässriger Suspension hergestellt, verarbeitet, transportiert oder gelagert werden, vorliegenden degradationsfördernden anaeroben Bakterien.

19. Verwendung von lebenden Mikroorganismen zur Hemmung des Wachstums der in einer Anlage der Papierindustrie, in welcher Stärke hergestellt, verarbeitet, transportiert oder gelagert wird, vorliegenden degradationsfördernden anaeroben Bakterien.

## Claims

1. A method for preserving, with most extensive exclusion of air or oxygen, aqueous solutions or dispersions in the paper and pulp industry which contain organic substances which are degraded by anaerobic bacteria present as impurities, **characterized in that** one adds to the solutions or dispersions living microorganisms which inhibit the growth of the anaerobic bacteria.

2. A method according to claim 1, **characterized in that** the anaerobic bacteria are sulfate-reducing bacteria.

3. A method according to claim 1, **characterized in that** one selects the microorganisms inhibiting the growth of degrading microorganisms from the group of bacteria and/or fungi.

4. A method according to claim 1, **characterized in that** one adds bacteria of the taxonomic groups
Alcaligenes
Enterobacteria
Pseudomonas
Bacillus
Lactobacillus
Micrococcus
Staphylococcus
Streptomyces
Cellulomonas
Thiobacillus
Streptococcus
or mixtures thereof.

5. A method according to claim 4, **characterized in that** the bacteria added are dry bacteria or mixed cultures of dry bacteria.

6. A method according to claim 5, **characterized in that** the m xed cultures of dry bacteria which are added include Gram-negative bacteria like Aeromonas, Acinetobacter, Alcaligenes, Enterobacteria, Pseudomonas and/or Gram-positive bacteria like Bacillus, Lactobacillus, Micrococcus, Staphylococcus and Streptococcus.

7. A method according to any of claims 1 to 6, **characterized in that** one adds simple or mixed cultures of the microorganisms suspended in a liquid.

8. A method according to claim 5, **characterized in that** the liquid additionally contains additives which suppress the metabolism of the microorganisms.

9. A method according to claim 7 or 8, **characterized in that** the microorganisms suspended in the liquid are spores of spore-forming organisms of the aerobic species Bacilli megaterium, B. cereus, B. subtilis, B. lichiniformus, B. anthracis, B. thuringiensis, B. polymyxa, B. mascerans, B. stearothermophilus, B. circulans, B. pasteurii, and the anaerobic species saccharolytic Clostridium, including C. butyricum, C. acetobutyricum, C. cellulosae dissolvens; peptolytic Clostridium like C. hystolyticum, C. sporogenes; ureolytic Clostridium like C. acidiuric, and other spore-forming types like Oscillospira guilliermondii.

10. A method according to claim 3, **characterized in that** the microorganism added to the product to be preserved is Thiosphaera pantotropha.

11. A method according to any of claims 1 to 10, **characterized in that** the quantity of microorganisms which is added based on the quantity of organic load of the liquid product to be preserved is 1 to 10¹⁰ microorganisms or bacteria per kg of total organic carbon (TOC) of the organic substances.

12. A method according to claim 11, **characterized in that** the quantity of added microorganisms is added to the liquid product to be preserved in accordance with the chemical conditions.

13. A method according to any of claims 1 to 12, **characterized in that** one adds further additives to the liquid to be preserved in the form of enzymes, supplines, surface-active agents and/or lignin sulfonates.

14. A method according to claim 13, **characterized in that** the quantity of added enzymes is 10 to 10,000 IU per kg TOC.

15. A method according to any of claims 1 to 14, **characterized in that** the microorganisms and/or other additives and/or oxygen are added in time- or quantity-proportional fashion.

16. Use of living microorganisms for inhibiting the growth of degradation-promoting anaerobic bacteria present in storage tanks or transport tanks in the paper and pulp industry.

17. Use of living microorganisms for inhibiting the growth of degradation-promoting anaerobic bacteria present in a plant of the paper industry in which paper machine broke is processed, transported or stored.

18. Use of living microorganisms for inhibiting the growth of degradation-promoting anaerobic bacteria present in a plant of the paper and pulp industry in which pigment fillers in aqueous suspension are produced, processed, transported or stored.

19. Use of living microorganisms for inhibiting the growth of degradation-promoting anaerobic bacteria present in a plant of the paper industry in which starch is produced, processed, transported or stored.

## Revendications

1. Procédé pour la conservation, en absence d'air, respectivement d'oxygène circulant, de solutions ou de dispersions aqueuses dans l'industrie du papier et de la cellulose, qui contiennent des matières organiques, qui sont dégradées par des bactéries anaérobies présentes en tant qu'impuretés, **caractérisé en ce qu'**on ajoute des microorganismes vivants dans les solutions ou les dispersions, qui inhibent la croissance des bactéries anaérobies.

2. Procédé selon la revendication 1, **caractérisé en ce que** les bactéries anaérobies sont des bactéries sulfato - réductrices.

3. Procédé selon la revendication 1, **caractérisé en ce qu'**on choisit les microorganismes inhibant la croissance des microorganismes dégradants dans le groupe des bactéries et/ou des champignons.

4. Procédé selon la revendication 1, **caractérisé en ce qu'**on ajoute des bactéries du groupe taxonomique des Alcaligenes, Enterobacteria, Pseudomonas, Bacillus, Lactobacillus, Micrococcus, Staphyloccocus, Streptomyces, Cellulomonas, Thiobacillus, Streptococcus cu leurs mélanges.

5. Procédé selon la revendication 4, **caractérisé en ce qu'**on ajoute comme bactéries des bactéries sèches ou des mélanges de cultures de bactéries sèches.

6. Procédé selon la revendication 5, **caractérisé en ce que** les mélanges de cultures de bactéries sèches qu'on ajoute, comprennent des bactéries gram-négatives comme des Aeromonas, Acinetobacter, Alcalignenes, Enterobactéries, Pseudomonas et/ou des bactéries gram-positives comme Bacillus, Lactobacillus, Micrococcus, Staphylococcus et Streptococcus.

7. Procédé selon l'une des revendications 1 à 6, **caractérisé en ce qu'**on ajoute en suspension dans un liquide des cultures simples ou en mélange de microorganismes.

8. Procédé selon la revendication 5, **caractérisé en ce que** le liquide contient des additifs supplémentaires, qui répriment le métabolisme des microorganismes.

9. Procédé selon la revendication 7 ou 8, **caractérisé en ce que** les microorganismes en suspension dans le liquide sont des spores de microorganismes formant des spores d'espèces aérobies Bacilli megaterium, B. cereus, B. subtilis, B. lichiniformus, B. anthracis, B. thuringiensis, B. polymyxa, B. mascerans, B. stearothermophilus, B. circulans, B. pasteurii et des espèces anaérobies de Clostridium saccarolytique comprenant Clostridium butyricum, C. acétobutyricum, C. cellulosae dissolvens ; Pepto Clostridium comme C. Hystolyticum, C. sporogenes, des Clostridium décomposant l'urée comme C. acidi-uriei et d'autres types formant des spores comme Oscillospira guilliermondii.

10. Procédé selon la revendication 3, **caractérisé en ce que** le microorganisme ajouté au produit conservateur est Thiosphera Pantotropha.

11. procédé selon l'une des revendications 1 à 10, **caractérisé en ce que** la quantité du microorganisme qui est ajoutée rapportée à la quantité de la charge organique du produit liquide conservateur est 1 à 10¹⁰ microorganismes ou bactéries par kg du carbone organique total (TOC) de la matière organique.

12. Procédé selon la revendication 11, **caractérisé en ce qu'**on ajoute au produit liquide conservateur la quantité des microorganismes en fonction des conditions chimiques.

13. Procédé selon l'une des revendications 1 à 12, **caractérisé en ce qu'**on ajoute au liquide conservateur d'autres additifs sous forme d'enzymes, assouplissants, tensioactifs et/ou lignosulfonates.

14. Procédé selon la revendication 13, **caractérisé en ce que** la quantité de l'enzyme ajoutée est 10 à 1000 IU par kg de TOC.

15. Procédé selon l'une des revendications 1 à 14, **caractérisé en ce que** l'addition des microorganismes et/ou des autres additifs se fait proportionnellement au temps ou aux quantités.

16. Utilisation de microorganismes vivants pour l'inhibition de la croisssance de bactéries anaérobies provoquant la dégradation présentes dans des réservoirs ou des conteneurs de transport dans l'industrie du papier et de la cellulose.

17. Utilisation de microorganismes vivants pour l'inhibition de la croissance de bactéries anaérobies provoquant la dégradation présentes dans un dispositif de l'industrie du papier dans lequel une sortie de machine à papier est traitée, transportée ou stockée.

18. Utilisation de microorganismes vivants pour l'inhibition de la croissance de bactéries anaérobies provoquant la dégradation présentes dans un dispositif de l'industrie du papier et de la cellulose, dans lequel des charges pigmentées en suspension aqueuse sont préparées, traitées, transportées ou stockées.

19. Utilisation de microorganismes vivants pour l'inhibition de la croissance de bactéries anaérobies provoquant la dégradation présentes dans un dispositif de l'industrie du papier dans lequel de l'amidon est préparé, traité, transporté ou stocké.
